# FASCICULE DE BREVET EUROPEEN

(11) **EP 2 212 607 B1**
(45) Date de publication et mention de la délivrance du brevet: **20.06.2012**
(21) Numéro de dépôt: 08842169.8
(22) Date de dépôt: 20.10.2008
(51) Int. Cl.: F16L 21/06, F16L 33/04, F16L 58/18, C23F 13/10

(54) **Collier pour liaison tubulaire**
Manschette für eine Rohrkupplung
Collar for a tubular coupling

(30) Priorité: 23.10.2007 FR 0758509
(43) Date de publication de la demande: 04.08.2010
(73) Titulaire: Saint-Gobain PAM, 54000 Nancy (FR)
(72) Inventeur: FRANCOIS-BRAZIER, Joël, F-54700 Pont-A-Mousson (FR); NOUAIL, Gérard, F-57000 Metz (FR)
(74) Mandataire: Jacobson, Claude
(86) Numéro de dépôt international: PCT/FR2008/051885
(87) Numéro de publication internationale: WO 2009/053661

(56) Documents cités:
- EP-A- 0 170 129
- DE-U1- 8 814 581
- DE-U1- 9 416 471
- GB-A- 2 389 395
- US-A- 4 463 975

## Description

La présente invention concerne un collier pour liaison tubulaire, du type comprenant
- un corps de collier, ayant une ceinture en un premier acier et au moins une bride de serrage en un deuxième acier,
- des moyens de serrage de la bride munis d'au moins une vis en un troisième acier différent des premier et deuxième aciers.

On connaît dans l'état de la technique des jonctions tubulaires destinées à relier deux bouts unis d'une manière étanche, voir GB 2 389 395 A par exemple.

Les jonctions connues comportent un collier de serrage muni de deux brides de serrage en acier inoxydable. Les brides de serrage sont généralement serrées l'une contre l'autre au moyen de boulons, de vis et d'écrous en acier non inoxydable, ces derniers étant souvent revêtus d'un matériau dont l'une des fonctions majeures est la protection anticorrosion.

Lorsque les vis sont en place sur les brides, les vis sont soumises à une corrosion en raison de la combinaison de l'endommagement du revêtement anticorrosion lors du serrage des boulons ou des vis et de l'effet de pile galvanique. En conséquence, la durée de service du collier de serrage, tributaire de la tenue à la corrosion de chacun de ses composants, est limitée.

L'invention a pour but de proposer un collier de serrage qui ait une tenue à la corrosion et donc une durée de service augmentée.

L'invention s'applique plus particulièrement aux colliers de serrage pour la jonction d'éléments tubulaires, notamment en fonte, destinés à l'évacuation des eaux usées et pluviales des bâtiments.

A cet effet, l'invention a pour objet un collier du type précité, caractérisé par les caractéristiques de la revendication 1.

Selon des modes particuliers de réalisation, le collier selon l'invention comporte l'une ou plusieurs des caractéristiques suivantes :
- la matière sacrificielle est du zinc ou de l'aluminium ou du magnésium ou un alliage à base de ces métaux ;
- l'élément sacrificiel est une rondelle ;
- l'élément sacrificiel est interposé entre les moyens de serrage et la bride de serrage associée ;
- les moyens de serrage comprennent un écrou en un métal pouvant être différent des premier et deuxième aciers, notamment en un quatrième acier ou en laiton, et la matière sacrificielle a un potentiel d'oxydation inférieur au potentiel d'oxydation du métal de l'écrou ;
- le premier acier est de type inoxydable, le deuxième acier de type non inoxydable ou inoxydable et le troisième acier de type non inoxydable, et le cas échéant, l'écrou est en un acier de type non inoxydable ou inoxydable ;
- la vis a une tête de vis et une partie filetée ;
- la rondelle est interposée entre la tête de vis, le cas échéant et/ou l'écrou, et la bride de serrage ;
- la rondelle est placée entre les brides de serrage ;
- le collier comprend une garniture d'étanchéité ; et
- le collier comprend des griffes de verrouillage de deux bouts unis.

L'invention a également pour objet une utilisation d'un collier de serrage selon la revendication 12.

L'invention sera mieux comprise à la lecture de la description qui va suivre, donnée uniquement à titre d'exemple et faite en se référant aux dessins annexés, sur lesquels :
- la Figure 1 est une vue en perspective d'une jonction tubulaire selon une première variante de l'invention ; et
- la Figure 2 est une vue en perspective d'une jonction tubulaire selon une deuxième variante de l'invention.

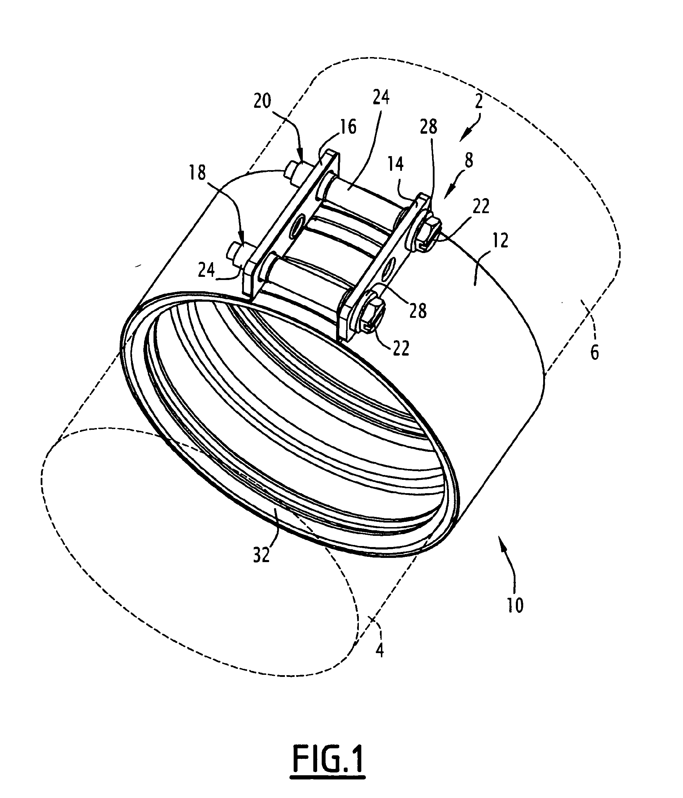

Sur la Figure 1 est représentée une jonction tubulaire selon une première variante de l'invention, désignée par la référence générale 2.

La jonction tubulaire 2 comporte deux tuyaux 4, 6, dont chacun est muni d'un bout uni. La jonction tubulaire 2 est en outre munie d'un collier de liaison 8 adapté pour relier les deux bouts unis d'une manière étanche.

Le collier de liaison 8 comporte un corps de collier 10. Ce corps de collier 10 est essentiellement constitué d'une ceinture 12 lisse s'étendant autour des bouts unis des tuyaux 4 et 6, ainsi que de deux brides de serrage 14, 16. Chacune des deux brides de serrage 14, 16 est positionnée perpendiculairement et radialement par rapport à la ceinture 12. Chacune des brides de serrage 14, 16 est constituée d'une plaque rectangulaire. Les brides de serrage 14, 16 sont fixées à la ceinture 12.

Le collier de liaison 8 comporte en outre des moyens de serrage des deux brides 14, 16, l'une vers l'autre, afin de serrer la ceinture 12 contre les tuyaux 4, 6.

En l'occurrence, les moyens de serrage comportent deux vis 18, 20, dont chacune comporte une tête de vis 22 et une partie filetée 24. Les moyens de serrage comportent en outre des taraudages ménagés dans la bride de serrage 16, dans lesquelles s'engagent les parties filetées 24.

Les vis 18, 20 sont fabriquées en un acier non inoxydable. Les vis peuvent être revêtues d'un matériau dont l'une des fonctions majeures est la protection anticorrosion.

La ceinture 12 et les brides de serrage 14, 16 sont fabriquées en acier inoxydable de types ferritique, tels que 1.4510 ou 1.4511 selon la norme EN 10027-2, ou martensitique, voire austénitique. La ceinture 12 et les brides de serrage 14, 16 peuvent être fabriquées en des aciers identiques ou différents. En variante, les brides de serrage 14, 16 peuvent être en un acier non inoxydable.

Le collier de liaison 8 comporte en outre des éléments sacrificiels, sous forme de deux rondelles sacrificielles 28 en zinc qui sont interposées entre chaque tête de vis 22 et la bride de serrage 14. Cette configuration a l'avantage de garantir une surface de contact entre chaque tête de vis 22 et chaque rondelle 28.

Ainsi, lors de l'installation du collier de liaison 8 dans un environnement corrosif, ce sont en priorité les rondelles 28 en zinc qui sont soumises à la corrosion. En conséquence, la durée de service des moyens de serrage 18, 20 et donc du collier de liaison 8 est augmentée.

L'agencement des éléments sacrificiels sous forme de rondelles 28 interposées entre les têtes de vis 22 et la bride de serrage 14 est techniquement et économiquement facile à mettre en oeuvre lors de la fabrication, et l'épaisseur des éléments sacrificiels est telle que leur incidence sur les performances à long terme autres que la tenue à la corrosion de la jonction est quasi inexistante.

En outre, le collier de liaison 8 comporte une garniture d'étanchéité 32 en élastomère. La garniture d'étanchéité 32 s'applique contre les surfaces extérieures des tuyaux 4, 6.

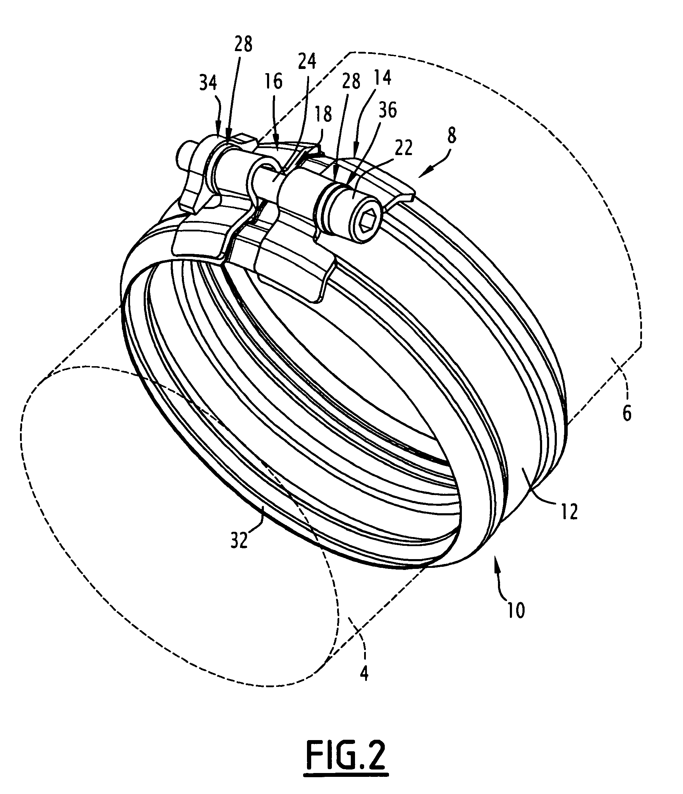

La jonction tubulaire 2 de la Figure 2 diffère de la jonction précédemment décrite par ce qui suit. Les éléments analogues portent les mêmes références.

La jonction tubulaire comporte un corps de collier 10 muni d'une ceinture 12 profilée. Les brides de serrage 14, 16 ont au centre un profil radial en forme de U et sont fixées à la ceinture 12 par exemple par soudage. Les brides de serrage 14, 16 ne comportent pas de taraudages.

Les moyens de serrage sont munis d'un écrou 34, de préférence type « chapeau de gendarme » ou à ailes pour prendre appui sur la bride de serrage 16 et empêcher sa rotation lors du serrage. L'écrou 34 est, par exemple, fabriqué en un acier non inoxydable.

De plus, les moyens de serrage comportent de préférence une rondelle de serrage 36 qui pourra être interposée entre la rondelle 28 en zinc et la tête de vis 22. La rondelle de serrage 36 est par exemple fabriquée en un acier non inoxydable et souvent revêtue d'un matériau dont l'une des fonctions majeures est la protection anticorrosion.

Une rondelle sacrificielle 28 supplémentaire en zinc pourra être interposée entre l'écrou 34 et la bride de serrage 16 pour compléter l'action de la première rondelle sacrificielle.

Cette variante garantit une surface de contact entre les éléments sacrificiels, à savoir les rondelles 28, et la vis 20/l'écrou 34.

D'une manière générale, la ceinture 12 du corps de collier 10 est fabriquée en un premier acier. Les brides de serrage 14, 16 sont fabriquées en un deuxième acier, qui peut être identique au premier acier.

Les vis 18, 20 des moyens de serrage sont fabriqués en un troisième acier, différent du premier acier utilisé pour la ceinture 12 de collier 10 et du deuxième acier utilisé pour les brides de serrage 14, 16. Ce troisième acier est soit en un acier non-inoxydable revêtu par un matériau anticorrosion, soit en un acier ayant un potentiel d'oxydation différent du potentiel d'oxydation du premier acier.

En variante, la rondelle 28 sacrificielle peut être en zinc ou en aluminium ou en magnésium ou alliage à base de ces métaux, par exemple le « ZAMAC », ou en un métal ou alliage ayant un potentiel d'oxydation inférieur aux potentiels d'oxydation des premier, deuxième et troisième aciers utilisés respectivement pour le corps de collier 10, les brides 14, 16 et les vis 18, 20.

En variante, la rondelle 28 sacrificielle peut être placée sur les vis 18, 20 mais entre les deux brides de serrage 14, 16.

L'écrou 34 est fabriqué en un métal différent des premier et deuxième aciers et peut être fabriqué en un quatrième acier ou en laiton. Dans le cas d'utilisation d'un écrou 34, la matière utilisée pour la rondelle 28 a un potentiel d'oxydation inférieur au potentiel d'oxydation du métal de l'écrou 34.

En variante encore, l'élément sacrificiel peut être un élément autre qu'une rondelle sacrificielle.

En variante, le collier de liaison 8 comporte en plus ou à la place de la garniture d'étanchéité 32 des griffes de verrouillage adaptées pour s'appliquer sur la surface extérieure des bouts unis afin de verrouiller les deux bouts unis.

## Revendications

1. Collier pour liaison tubulaire (2), du type comprenant
- un corps de collier (10), ayant une ceinture (12) en un premier acier et au moins une bride de serrage (14, 16) en un deuxième acier,
- des moyens de serrage de la bride munis d'au moins une vis (18, 20) en un troisième acier différent des premier et deuxième aciers,
**caractérisé en ce que** le collier comporte un élément sacrificiel (28) en une matière sacrificielle qui est un métal ou un alliage ayant un potentiel d'oxydation inférieur aux potentiels d'oxydation des premier, deuxième, et troisième aciers,
et **en ce que** le premier et le deuxième aciers ont des potentiels d'oxydation supérieurs au potentiel d'oxydation du troisième acier, et le cas échéant, au potentiel d'oxydation du métal de l'écrou (34)

2. Collier suivant la revendication 1, **caractérisé en ce que** la matière sacrificielle est du zinc ou de l'aluminium ou du magnésium ou un alliage à base de ces métaux.

3. Collier suivant la revendication 1 ou 2, **caractérisé en ce que** l'élément sacrificiel est une rondelle (28).

4. Collier suivant l'une quelconque des revendications 1 à 3, **caractérisé en ce que** l'élément sacrificiel (28) est interposé entre les moyens de serrage (18, 20, 34) et la bride de serrage (14, 16) associée.

5. Collier suivant l'une quelconque des revendications 1 à 4, **caractérisé en ce que** les moyens de serrage comprennent un écrou (34) en un métal pouvant être différent des premier et deuxième aciers, notamment en un quatrième acier ou en laiton, et **en ce que** la matière sacrificielle a un potentiel d'oxydation inférieur au potentiel d'oxydation du métal de l'écrou (34).

6. Collier suivant l'une quelconque des revendications 1 à 5, **caractérisé en ce que** le premier acier est de type inoxydable, le deuxième acier de type non inoxydable ou inoxydable et le troisième acier de type non inoxydable, et le cas échéant, l'écrou (34) est en un acier de type non inoxydable ou inoxydable.

7. Collier suivant l'une quelconque des revendications 1 à 6, **caractérisé en ce que** la vis (18, 20) a une tête de vis (22) et une partie filetée (24).

8. Collier suivant au moins les revendications 3, 4 et 7 prises ensemble, **caractérisé en ce que** la rondelle (28) est interposée entre la tête de vis (22), le cas échéant et/ou l'écrou (34), et la bride de serrage (14, 16).

9. Collier suivant au moins les revendications 3 et 7 prises ensemble, **caractérisé en ce que** la rondelle (28) est placée entre les brides de serrage (14,16).

10. Collier suivant l'une quelconque des revendications précédentes, **caractérisé en ce que** le collier comprend une garniture d'étanchéité (32).

11. Collier suivant l'une quelconque des revendications précédentes, **caractérisé en ce que** le collier comprend des griffes de verrouillage de deux bouts unis.

12. Utilisation d'un collier de serrage selon l'une quelconque des revendications précédentes pour la jonction d'éléments tubulaires servant à l'évacuation des eaux usées et pluviales des bâtiments.

## Claims

1. Collar for a tubular coupling (2), of the type comprising:
- a collar body (10), having a belt (12) in a first steel and at least one clamping flange (14, 16) in a second steel,
- means for clamping the flange provided with at least one screw (18, 20) in a third steel different from the first and second steels,
**characterised in that** the collar includes a sacrificial element (28) in a sacrificial material which is a metal or an alloy having an oxidation potential less than the oxidation potentials of the first, second and third steels,
and **in that** the first and second steels have oxidation potentials greater than the oxidation potential of the third steel, and than the oxidation potential of the metal of the nut (34), if it is provided.

2. Collar according to claim 1, **characterised in that** the sacrificial material is zinc or aluminium or magnesium or an alloy of these metals.

3. Collar according to claims 1 or claim 2, **characterised in that** the sacrificial element is a washer (28).

4. Collar according to any one of claims 1 to 3, **characterised in that** the sacrificial element (28) is interposed between the clamping means (18, 20, 34) and the associated clamping flange (14, 16).

5. Collar according to any one of claims 1 to 4, **characterised in that** the camping means comprise a nut (34) in a metal which may be different from the first and second steels, in particular in a fourth steel or brass, and **in that** the sacrificial materiel has an oxidation potential less than the oxidation potential of the metal of the nut (34).

6. Collar according to any one of claims 1 to 5, **characterised in that** the first steel is a stainless steel, the second steel is a non-stainless steel or a stainless steel and the third steel is a non-stainless steel, and if it is provided, the nut (34) is a non-stainless steel or a stainless steel.

7. Collar according to any one of claims 1 to 6, **characterised in that** the screw (18, 20) has a screw head (22) and a threaded portion (24).

8. Collar according to at least claims 3, 4 and 7 taken together, **characterised in that** the washer (28) is interposed between the screw head (22) and/or the nut (34) if it is provided, and the clamping flange (14, 16).

9. Collar according to at least claims 3 and 7 taken together, **characterised in that** the washer (28) is placed between the clamping flanges (14, 16).

10. Collar according to any one of the preceding claims, **characterised in that** the collar comprises a seal (32).

11. Collar according to any one of the preceding claims, **characterised in that** the collar comprises claws for locking two even ends.

12. The use of a clamping collar according to any one of the preceding claims for the junction of tubular elements serving to take away waste water and rain water from buildings.

## Patentansprüche

1. Manschette für eine Rohrkupplung (2), des Typs, der Folgendes umfasst:
- einen Manschettenkörper (10) mit einem Gurtband (12) aus einem ersten Stahl und wenigstens einer Spannbrücke (14, 16) aus einem zweiten Strahl,
- Mittel zum Spannen der Brücke, die mit wenigstens einer Schraube (18, 20) aus einem dritten Stahl ausgestattet sind, der sich vom ersten und zweiten Stahl unterscheidet,
**dadurch gekennzeichnet, dass** die Manschette ein Opferelement (28) aus einem Opfermaterial umfasst, das ein Metall oder eine Legierung mit einem geringeren Oxidationspotential ist als die Oxidationspotentiale des ersten, zweiten und dritten Stahls,
und dadurch, dass die Oxidationspotentiale des ersten und zweiten Stahls höher sind als das Oxidationspotential des dritten Stahls und ggf. als das Oxidationspotential des Metalls der Mutter (34).

2. Manschette nach Anspruch 1, **dadurch gekennzeichnet, dass** das Opfermaterial Zink oder Aluminum oder Magnesium oder eine Legierung auf der Basis dieser Metalle ist.

3. Manschette nach Anspruch 1 oder 2, **dadurch gekennzeichnet, dass** das Opferelement eine Zwischenscheibe (28) ist.

4. Manschette nach einem der Ansprüche 1 bis 3, **dadurch gekennzeichnet, dass** sich das Opferelement (28) zwischen den Spannmitteln (18, 20, 34) und der assoziierten Spannbrücke (14, 16) befindet.

5. Manschette nach einem der Ansprüche 1 bis 4, **dadurch gekennzeichnet, dass** die Spannmittel eine Mutter (34) aus einem Metall umfassen, das sich von dem ersten und zweiten Stahl unterscheiden kann, insbesondere aus einem vierten Stahl oder aus Messing, und dadurch, dass das Opfermaterial ein niedrigeres Oxidationspotential hat als das Oxidationspotential des Metalls der Mutter (34).

6. Manschette nach einem der Ansprüche 1 bis 5, **dadurch gekennzeichnet, dass** der erste Stahl von rostfreiem Typ ist, der zweite Stahl entweder von nicht rostfreiem oder von rostfreiem Typ ist und der dritte Stahl von nicht rostfreiem Typ ist, und die Mutter (34) ggf. aus einem Stahl des nicht rostfreien oder des rostfreien Typs ist.

7. Manschette nach einem der Ansprüche 1 bis 6, **dadurch gekennzeichnet, dass** die Schraube (18, 20) einen Schraubenkopf (22) und einen Gewindeteil (24) aufweist.

8. Manschette wenigstens nach den Ansprüchen 3, 4 und 7 zusammen genommen, **dadurch gekennzeichnet, dass** sich die Zwischenscheibe (28) zwischen dem Schraubenkopf (22). ggf. und/oder der Mutter (34) und der Spannbrücke (14, 16) befindet.

9. Manschette wenigstens nach den Ansprüchen 3 und 7 zusammengenommen, **dadurch gekennzeichnet, dass** die Zwischenscheibe (28) zwischen die Spannbrücken (14, 16) gelegt wird.

10. Manschette nach einem der vorherigen Ansprüche, **dadurch gekennzeichnet, dass** die Manschette eine Dichtung (32) umfasst.

11. Manschette nach einem der vorherigen Ansprüche, **dadurch gekennzeichnet, dass** die Manschette Verriegelungsklauen mit zwei vereinigten Enden umfasst.

12. Verwendung einer Verriegelungsmanschette nach einem der vorherigen Ansprüche zum Verbinden von rohrförmigen Elementen zum Abführen von Abwasser und Niederschlagswasser aus Gebäuden.
